# DEMANDE DE BREVET EUROPEEN

(11) **EP 4 699 893 A1**
(43) Date de publication de la demande: **25.02.2026**
(21) Numéro de dépôt: 25194452.6
(22) Date de dépôt: 06.08.2025
(51) Int. Cl.: B61L 15/00, B61L 23/04, G06T 5/60, G06V 10/82, G06T 7/11

(54) **PROCÉDÉ ET SYSTÈME D'ANONYMISATION D'IMAGES D'EMPRISES FERROVIAIRES**

(30) Priorité: 21.08.2024 FR 2409020
(71) Demandeur: SNCF Voyageurs, 93200 Saint-Denis (FR)
(72) Inventeur: AFANOU, Sitou, 72000 Le Mans (FR)
(74) Mandataire: Bringer IP

(57) **Abrégé**

L'invention concerne un procédé d'anonymisation d'images d'un flux vidéo capté depuis un véhicule ferroviaire, le procédé comprenant une étape de réception d'au moins une image du flux vidéo, chaque image représentant une scène d'une emprise ferroviaire traversée par le véhicule ferroviaire, une étape de détection, sur chaque image reçue, d'au moins un portique de poteau caténaire agencé dans l'emprise ferroviaire, une étape de création pour chaque image reçue et à partir de chaque portique de poteau caténaire détecté sur l'image reçue, d'une boite englobante définissant une zone polygonale globalement entourée par le portique de poteau caténaire, une étape de traçage d'un polygone (70) de masquage pour chaque image reçue, reliant au moins un point de chaque boite englobante et définissant une zone d'anonymisation sur l'image, une étape d'application du masquage sur l'image reçue à partir du polygone (70) de masquage associé à ladite image.

## Description

### Domaine technique de l'invention

L'invention concerne un procédé d'anonymisation d'images d'un flux vidéo capté depuis un véhicule ferroviaire, un produit programme d'ordinateur et un système associé. L'invention concerne en particulier l'anonymisation d'images provenant de l'avant d'un véhicule ferroviaire, sur lesquels sont visibles une emprise ferroviaire ainsi que des éléments situés autour de l'emprise ferroviaire.

### Arrière-plan technologique

Les besoins d'enregistrement de données audio et/ou vidéo associés à la circulation d'un véhicule ferroviaire ont augmenté ces dernières années pour permettre notamment la surveillance des voies et des cabines, mais également pour permettre de disposer de données pour une investigation après incident ou accident. Un système proposé est le système appelé SEVAC (*Système d'Enregistrement Vidéo Audio en Cabine*) permettant d'enregistrer une, plusieurs ou la totalité des données suivantes :
- des interactions vocales entre le conducteur du véhicule ferroviaire et un personnel de gestion des circulations de l'infrastructure ferroviaire,
- des interactions vocales entre le conducteur et les passagers,
- une ambiance sonore dans la cabine de conduite,
- une vidéo de l'intérieur de la cabine de conduite
- une vidéo de la voie ferrée, en particulier de l'avant de la voie ferrée dans le sens de la marche du véhicule ferroviaire.

La vidéo de la voie ferrée peut en particulier être captée par une caméra agencée à l'avant du train, à l'extérieur (par exemple sur le nez du véhicule ferroviaire ou sur le pare-brise frontal de la cabine de conduite à l'extérieur) et/ou à l'intérieur de la cabine de conduite du véhicule ferroviaire (sur le pare-brise frontal de la cabine de conduite à l'intérieur, dirigé vers l'extérieur).

Le système s'apparente ainsi à une « boite noire », bien connue dans le domaine aéronautique et dans une moindre mesure dans le domaine routier.

Un inconvénient majeur de la prise de vidéo de la voie ferrée par un tel système est une problématique d'anonymisation des données traitées. En particulier, la captation, le stockage et l'enregistrement d'image affichant des zones privatives ou des individus peuvent poser des problèmes éthiques et/ou réglementaires sur la protection de la vie privée et des données personnelles.

Des solutions ont donc été cherchées pour anonymiser les vidéos captées afin de permettre la protection des données personnelles. Par exemple, une solution proposée est d'apposer des cadres occultants de part et d'autre de l'image, généralement sur la partie gauche et la partie droite de sorte à conserver uniquement la partie centrale de l'image. Ces cadres occultants n'épousent toutefois pas les géométries des emprises ferroviaires et il en résulte que des zones privatives peuvent rester visibles et des zones d'emprises ferroviaires peuvent être occultées.

Les documents US2022032978A1 et WO2023279131A1 décrivent des procédés de prises de vues comprenant des étapes d'anonymisation des images.

Les inventeurs ont cherché à proposer une solution alternative permettant une meilleure définition de la zone d'anonymisation de façon cohérente avec les géométries classiques d'emprises ferroviaires et leur représentation sur les images captées.

### Objectifs de l'invention

L'invention vise ainsi à fournir un procédé d'anonymisation, un système d'anonymisation et un produit programme d'ordinateur d'anonymisation qui pallient au moins certains des inconvénients des procédés connus.

L'invention vise également à fournir, dans au moins un mode de réalisation de l'invention, un procédé d' anonymisation permettant d' anonymiser sur une image l'intégralité ou la quasi-intégralité des zones privatives tout en conservant sur l'image l'intégralité ou la quasi-intégralité des zones correspondant à l'emprise ferroviaire.

L'invention vise également à fournir, dans au moins un mode de réalisation de l'invention, un procédé d'anonymisation pouvant être exécuté en temps réel ou en temps différé.

L'invention vise également à fournir, dans au moins un mode de réalisation de l'invention, un procédé d'anonymisation adapté à différentes configurations d'emprises ferroviaires.

L'invention vise également à fournir, dans au moins un mode de réalisation de l'invention, un procédé d'anonymisation minimisant le coût en ressource et en temps du traitement des images à anonymiser.

### Exposé de l'invention

Pour ce faire, l'invention concerne un procédé d'anonymisation d'images d'un flux vidéo capté depuis un véhicule ferroviaire, le procédé comprenant :
- une étape de réception d'au moins une image du flux vidéo, chaque image représentant une scène d'une emprise ferroviaire traversée par le véhicule ferroviaire,
- une étape de détection, sur chaque image reçue, d'au moins un portique de poteau caténaire agencé dans l'emprise ferroviaire,
- une étape de création pour chaque image reçue et à partir de chaque portique de poteau caténaire détecté sur l'image reçue, d'une boite englobante définissant une zone polygonale globalement entourée par le portique de poteau caténaire,
- une étape de traçage d'un polygone de masquage pour chaque image reçue, reliant au moins un point de chaque boite englobante et définissant une zone d'anonymisation sur l'image,
- une étape d'application du masquage sur l'image reçue à partir du polygone de masquage associé à ladite image.

Un procédé d'anonymisation selon l'invention permet donc l'anonymisation d'une zone de l'image en prenant compte de la réalité de l'emprise ferroviaire, en particulier de la présence de portique de poteau caténaire. En particulier, l'utilisation du polygone de masquage associé aux boites englobantes représentatives des portiques de poteau caténaire permet d'obtenir une image finale anonymisée conservant la quasi-intégralité ou l'intégralité des données de l'image représentant l'emprise ferroviaire et anonymisant la quasi-intégralité ou l'intégralité des données de l'image représentant l'extérieur de l'emprise ferroviaire, pouvant comprendre des zones privatives et des individus circulant autour de l'emprise ferroviaire.

Un « portique » de poteau caténaire est un terme générique désignant un ensemble généralement sensiblement rectangulaire formé d'un ou plusieurs poteaux verticaux fixés au sol et d'une ou plusieurs portions supérieures horizontales portant la caténaire. Le portique est formé par exemple :
- d'un poteau unique associé à une portion supérieure horizontale portant la caténaire, en particulier sur une voie ferroviaire simple, auquel cas le portique simule la présence d'un deuxième poteau caténaire agencé du côté de la voie non pourvu d'un poteau caténaire pour former un portique entourant l'ensemble de la voie ferroviaire simple,
- de deux poteaux caténaires associés à une portion supérieure horizontale commune portant la ou les caténaires, en particulier sur une voie ferroviaire double,
- de deux poteaux caténaires associés à chacun à une portion supérieure horizontale portant chacun une caténaire, en particulier sur une voie ferroviaire double.

L'anonymisation consiste à la suppression de données sur l'image traitée grâce au masquage, qui consiste généralement à remplacer les données de chaque pixel anonymisé à partir du polygone de masquage par un pixel neutre ne comprenant pas d'information utilisable, par exemple remplacer tous les pixels anonymisés par un pixel noir, un pixel blanc, un pixel transparent, etc. L'image anonymisée ainsi obtenue comprend ainsi une zone conservée avec les pixels tels que présents à l'origine dans l'image reçue et représentant l'emprise ferroviaire, et une zone anonymisée remplie de pixels neutres identiques ne donnant plus d'informations sur les éléments visibles sur cette zone avant le traitement.

Selon une variante préférentielle de l'invention, le polygone de masquage représente la zone de masquage dans laquelle les pixels sont rendus neutres.

Selon une autre variante de l'invention, le polygone de masquage peut représenter la zone de l'image qui doit être conservée, auquel cas les pixels rendus neutres dans l'étape d'application du masquage sont les pixels en dehors du polygone de masquage.

Avantageusement et selon l'invention, le polygone de masquage peut être également utilisé pour créer un masque binaire, comprenant une zone représentative de la zone d'anonymisation et une zone représentative de la zone à conserver.

Avantageusement et selon l'invention, le procédé comprend une étape de classement des boites englobantes en fonction de chacune de leurs dimensions sur l'image reçue, et en ce que l'étape de traçage relie au moins un point de chaque boite englobante selon ledit classement.

Selon cet aspect de l'invention, le classement des boites permet de simplifier le traçage du polygone de masquage, en permettant de relier les points dans l'ordre de la présence des portiques de poteau caténaire. En effet, une boite représentant un poteau caténaire de faible dimension indique la présence d'un portique de poteau caténaire au loin et les boites de tailles supérieures indiquent la présence d'un portique de poteau caténaire de plus en plus proche du véhicule ferroviaire.

Avantageusement et selon l'invention, le classement des boites est réalisé à partir des dimensions et/ou de l'aire de chaque boite englobante, et/ou à partir de données caractéristiques de la boite englobante (par exemple comparaison des hauteurs maximales, largeurs maximales, etc.).

Avantageusement et selon l'invention, chaque boite englobante est un quadrilatère représentatif du portique de poteau caténaire.

Selon cet aspect de l'invention, l'utilisation de quadrilatère permet de simplifier le nombre de points à traiter sans impacter la cohérence de la boite englobante par rapport à la forme générale d'un portique de poteau caténaire, comprenant globalement une ou deux portions verticales, une portion horizontale supérieure portant le ou les caténaires et le sol formant une portion horizontale inférieure.

Selon une variante préférentielle de l'invention, chaque boite englobante est un rectangle.

Avantageusement et selon l'invention, l'étape de détection d'au moins un portique de poteau caténaire comprend :
- une première sous-étape de détection d'un premier poteau caténaire,
- une première étape de création d'une première sous-boite englobante définissant une zone polygonale globalement entourée par le premier poteau caténaire,
- une deuxième sous-étape de détection d'un deuxième poteau caténaire,
- une deuxième étape de création d'une deuxième sous-boite englobante définissant une zone polygonale globalement entourée par le deuxième poteau caténaire,
et en ce que le quadrilatère formant la boite englobante est formé par association de deux sommets de la première sous-boite englobante et de deux sommets de la deuxième sous-boite englobante, de sorte à définir une zone entourée par le portique de poteau caténaire formée par le premier poteau caténaire et le deuxième poteau caténaire

Selon cet aspect de l'invention, le procédé permet de gérer des portiques formés de deux poteaux indépendants non-reliés par une portion horizontale commune. La boite englobante est ainsi formée par une combinaison de sommets appartenant aux sous-boites englobantes, chacune associée à un poteau caténaire.

Avantageusement et selon l'invention, le polygone de masquage comprend au moins :
- les quatre sommets de la boite englobante classée comme de plus petite dimension, dite plus petite boite,
- les sommets inférieurs droits et les sommets inférieurs gauches de chaque boite englobante classée comme de dimensions supérieures à la plus petite boite,
- les quatre sommets de l'image reçue.

Selon cet aspect de l'invention, le polygone ainsi formé permet de suivre des lignes naturellement formées par l'emprise ferroviaire telle que représentée sur les images captées. La petite boite englobe la portion de boite la plus lointaine, et les sommets inférieurs droits et inférieurs gauches permettent de caractériser des bords de la voie ferroviaire telle que représentée sur les images captées.

Avantageusement et selon l'invention, l'étape de traçage du polygone de masquage comprend la liaison des sommets suivants, successivement, dans cet ordre ou l'ordre inverse, et à partir de n'importe quel point de départ :
a) le sommet inférieur gauche de la plus petite boite,
b) le sommet supérieur gauche de la plus petite boite,
c) le sommet supérieur droit de la plus petite boite,
d) le sommet inférieur droit de la plus petite boite,
e) les sommets inférieurs droits de chaque boite englobante classée comme de dimensions supérieures à la plus petite boite, selon l'ordre croissant des dimensions des boites englobantes,
f) le sommet inférieur droit de l'image reçue,
g) le sommet supérieur droit de l'image reçue,
h) le sommet supérieur gauche de l'image reçue,
i) le sommet inférieur gauche de l'image reçue,
j) les sommets inférieurs gauches de chaque boite englobante classée comme de dimensions supérieures à la plus petite boite, selon l'ordre décroissant des boites englobantes.

Selon cet aspect de l'invention, la liste des sommets forme l'ensemble des points du polygone de masquage lorsqu'ils sont reliés entre eux. Le polygone est fermé et le premier sommet est relié dernier sommet.

Le polygone de masquage peut comprendre d'autres sommets que ceux énoncés dans cette liste.

Le terme « successivement » signifie que les sommets sont reliés dans l'ordre présenté (a), b), c), d) e), ... j)) ou l'ordre inverse (j), i), h), g), f), e), ...a)).

Le terme « à partir de n'importe quel point de départ » signifie que le premier sommet sélectionné peut être n'importe lequel dans la liste, du moment que tous les sommets sont sélectionnés, dans l'ordre ou l'ordre inverse, par exemple :
- sommets a), b), c), d), ... j) ;
- sommets c), d), e), ... j), a), b) ;
- sommets j), i), h), ... b), a) ;
- sommets d), c), b), a), j), i) ..., f), e) ;
- etc.

Avantageusement et selon l'invention, l'étape de détection d'au moins un portique de poteau caténaire comprend une sous étape d'exécution d'un modèle d'apprentissage automatique de détection de poteau caténaire et de détection de portique formé par un ou plusieurs poteaux caténaires, ledit modèle d'apprentissage recevant comme entrée chaque image reçue et fournissant comme sortie une information représentative de la présence et de la localisation d'un poteau caténaire et/ou d'un portique formé par un ou plusieurs poteaux caténaires, ledit modèle d'apprentissage étant pré-entraîné à partir d'un jeu de données comprenant des images représentant un ou plusieurs poteaux caténaires et un ou plusieurs portiques formés par un ou plusieurs poteaux caténaires.

Selon cet aspect de l'invention, un modèle d'apprentissage automatique pré-entraîné peut permettre la détection des portiques de poteau caténaire.

Avantageusement et selon l'invention, le modèle d'apprentissage peut également être entraîné pour générer les boites englobantes comme sortie.

L'invention concerne également un produit programme d'ordinateur d'anonymisation d'images d'un flux vidéo capté depuis un véhicule ferroviaire, ledit produit programme d'ordinateur comprenant des instructions de code de programme pour l'exécution, lorsque ledit produit programme d'ordinateur est exécuté sur un ordinateur, des étapes d'un procédé d'anonymisation selon l'invention.

L'invention concerne également un système d'anonymisation d'images d'un flux vidéo capté depuis un véhicule ferroviaire, comprenant une unité de traitement des images du flux vidéo comprenant :
- un module de réception d'au moins une image du flux vidéo, chaque image représentant une scène d'une emprise ferroviaire traversée par le véhicule ferroviaire,
- un module de détection, sur chaque image reçue, d'au moins un portique de poteau caténaire agencé dans l'emprise ferroviaire,
- un module de création pour chaque image reçue et à partir de chaque portique de poteau caténaire détecté sur l'image reçue, d'une boite englobante définissant une zone polygonale globalement entourée par le portique de poteau caténaire,
- un module de traçage d'un polygone de masquage pour chaque image reçue, reliant au moins un point de chaque boite englobante et définissant une zone d'anonymisation sur l'image,
- un module d'application du masquage sur l'image reçue à partir du polygone de masquage associé à ladite image.

Avantageusement, le système d'anonymisation selon l'invention est configuré pour mettre en œuvre le procédé d'anonymisation selon l'invention.

Avantageusement et selon l'invention, le procédé d'anonymisation selon l'invention est configuré pour être mis en œuvre par un système d'anonymisation selon l'invention.

En particulier, chaque étape du procédé d'anonymisation peut être mise en œuvre par un module associé du système d'anonymisation.

Dans tout le texte, on désigne par module, un élément logiciel, un sousensemble d'un programme logiciel, pouvant être compilé séparément, soit pour une utilisation indépendante, soit pour être assemblé avec d'autres modules d'un programme, ou un élément matériel, ou une combinaison d'un élément matériel et d'un sous-programme logiciel. Un tel élément matériel peut comprendre un circuit intégré propre à une application (plus connu sous l'acronyme ASIC pour la dénomination anglaise Application-Specific Integrated Circuit) ou un circuit logique programmable (plus connu sous l'acronyme FPGA pour la dénomination anglaise Field-Programmable Gate Array) ou un circuit de microprocesseurs spécialisés (plus connu sous l'acronyme DSP pour la dénomination anglaise Digital Signal Processor) ou tout matériel équivalent ou toute combinaison des matériels précités. D'une manière générale, un module est donc un élément (logiciel et/ou matériel) qui permet d'assurer une fonction.

p d'acquisition du flux vidéo, ladite caméra étant agencée à l'avant d'un véhicule ferroviaire, de sorte à acquérir des images de l'emprise ferroviaire située à l'avant du véhicule ferroviaire dans son sens de marche en fonctionnement normal

Avantageusement et selon l'invention, le système l'unité de traitement est embarquée sur un véhicule ferroviaire.

Selon une autre variante de l'invention, le système est une unité de traitement externe au véhicule ferroviaire, par exemple sur une unité de lecture du flux vidéo.

L'invention concerne également un procédé d'anonymisation, un produit programme d'ordinateur d'anonymisation et un système d'anonymisation caractérisés en combinaison par tout ou partie des caractéristiques mentionnées ci-dessus ou ci-après.

### Liste des figures

D'autres buts, caractéristiques et avantages de l'invention apparaitront à la lecture de la description suivante donnée à titre uniquement non limitatif et qui se réfère aux figures annexées dans lesquelles :
[Fig. 1] est une vue schématique d'un véhicule ferroviaire équipé d'un système d'anonymisation selon un mode de réalisation de l'invention,
[Fig. 2] est une vue schématique d'un procédé d'anonymisation selon un mode de réalisation de l'invention,
[Fig. 3] est une vue schématique d'une première image telle que reçue par un procédé d'anonymisation selon un mode de réalisation de l'invention,
[Fig. 4] est une vue schématique de la première image telle qu'anonymisée par un procédé selon l'art antérieur,
[Fig. 5] est une vue schématique de la première image telle que traitée par un procédé selon un mode de réalisation de l'invention,
[Fig. 6] est une vue schématique des boites englobantes et d'un polygone de masquage obtenus par un procédé selon un mode de réalisation de l'invention à partir de la première image,
[Fig. 7] est une vue schématique de la première image telle qu'anonymisée par un procédé selon un mode de réalisation de l'invention,
[Fig. 8] est une vue schématique d'une deuxième image telle que traitée par un procédé selon un mode de réalisation de l'invention,
[Fig. 9] est une vue schématique de la deuxième image telle qu'anonymisée par un procédé selon un mode de réalisation de l'invention
[Fig.10] est une vue schématique d'une troisième image telle que traitée par un procédé selon un mode de réalisation de l'invention,
[Fig. 11] est une vue schématique d'une quatrième image telle que traitée par un procédé selon un mode de réalisation de l'invention,
[Fig. 12] est une vue schématique d'une cinquième image telle que traitée par un procédé selon un mode de réalisation de l'invention.

### Description détaillée de modes de réalisation de l'invention

Sur les figures, les échelles et les proportions ne sont pas strictement respectées et ce, à des fins d'illustration et de clarté. En outre, les éléments identiques, similaires ou analogues sont désignés par les mêmes références sur toutes les figures.

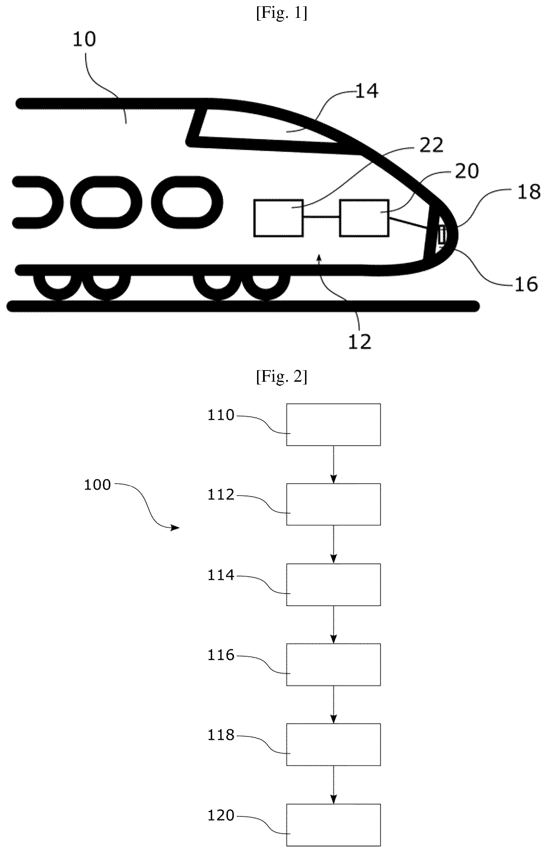

La figure 1 représente schématiquement un véhicule 10 ferroviaire équipé d'un système 12 d'anonymisation selon un mode de réalisation de l'invention.

Le véhicule 10 ferroviaire comprend en particulier une motrice comprenant une cabine de conduite à l'avant couverte par un pare-brise 14. Un nez 16 à l'avant du véhicule ferroviaire comprend une caméra 18 d'acquisition du flux vidéo permettant d'acquérir des images de l'emprise ferroviaire située à l'avant du véhicule ferroviaire dans son sens de marche en fonctionnement normal. Si le véhicule peut se déplacer en fonctionnement normal dans les deux sens, une caméra est présente à chaque extrémité. La caméra peut également être agencée au niveau du pare-brise 14, à l'extérieur ou à l'intérieur de la cabine. Le positionnement de la caméra dépend des contraintes structurelles, environnementales et réglementaires auxquelles est soumis le véhicule ferroviaire. La caméra 18 est placée pour filmer longitudinalement une zone débutant quelques mètres devant le nez 16 du train. La caméra 18 est adaptée à la dynamique de la scène filmée, notamment par sa faculté à compenser les changements brusques de luminosité (lors d'une entrée/sortie d'un tunnel par exemple) et à capturer des images à haute vitesse (fréquence d'image par secondes adaptée).

La caméra transmet tout ou partie du flux vidéo à une unité 20 de traitement, comprenant des modules pour la mise en œuvre d'un procédé d'anonymisation décrit ci-après. L'unité de traitement peut également recevoir, traiter et transmettre des données depuis et vers des équipements 22 complémentaires, tels que des microphones, des caméras intérieures, des dispositifs de communications, etc.

Selon un autre mode de réalisation non représenté, l'unité de traitement du véhicule ferroviaire stocke uniquement les données du flux vidéo et le procédé d'anonymisation est mis en œuvre dans une unité de traitement externe, par exemple dans un centre de contrôle ou d'investigation.

L'unité de traitement intégrée dans le véhicule ferroviaire peut être par exemple, selon le mode de réalisation mis en œuvre et la puissance de calcul nécessaire, un calculateur ferroviaire classique, un nano-ordinateur ou miniordinateur de type Raspberry Pi, une carte électronique programmable de type FPGA ou ASIC, etc.

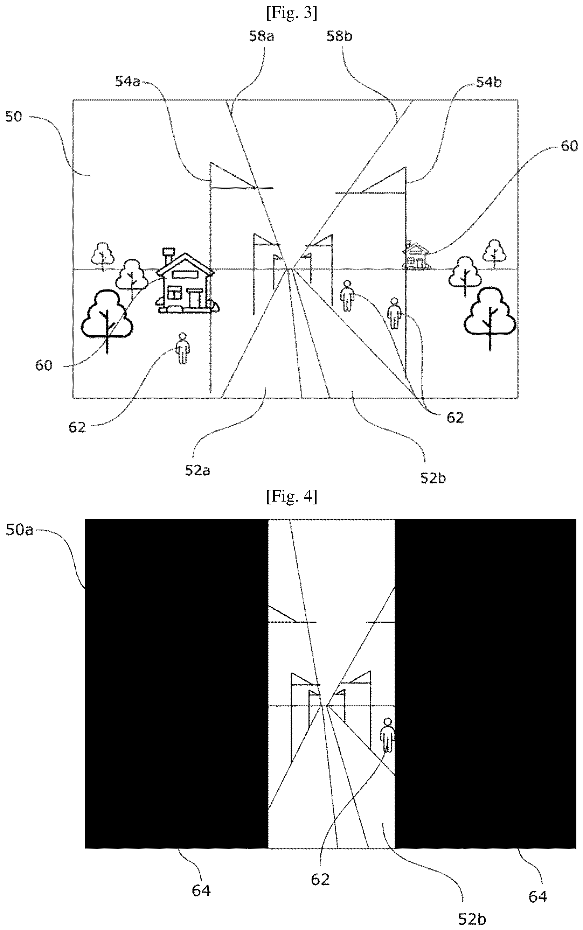

La figure 3 représente schématiquement une première image 50 telle que reçue par un procédé d'anonymisation selon un mode de réalisation de l'invention, et telle que captée par une caméra d'acquisition d'un système d'anonymisation selon un mode de réalisation de l'invention, par exemple celui de la figure 1.

L'image 50, captée à l'avant du véhicule ferroviaire lors de sa circulation, représente une emprise ferroviaire comprenant au moins une première voie 52a ferroviaire sur laquelle circule le véhicule ferroviaire, et ici une deuxième voie 52b ferroviaire pour les véhicules ferroviaires circulant généralement dans le sens opposé. L'image 50 représente également deux poteaux 54a, 54b caténaires formant un portique de poteau caténaire, portant chacun un câble 58a, 58b caténaire. Les câbles caténaires sont symbolisés par une ligne simple pour des raisons de clarté, sans prendre en compte de câble porteur ou câble conducteur tel que présents sur une ligne caténaire ferroviaire classique.

L'image 50 représente également des zones privatives, ici symbolisées par des maisons 60, et des individus 62. L'objectif de l'anonymisation est de supprimer les données de l'image captée représentant ces zones privatives et ces individus pour des raisons de confidentialité.

La figure 4 représente schématiquement la première image 50a telle qu'anonymisée par un procédé selon l'art antérieur.

En appliquant uniquement des cadres 64 noirs sur le bord de l'image, autour des voies ferroviaires, une partie de la voie ferroviaire 52b n'est plus visible et un individu 62 circulant hors de l'emprise ferroviaire délimitée par les voies reste visible.

La figure 2 représente schématiquement un procédé 100 d'anonymisation d'images d'un flux vidéo capté depuis un véhicule ferroviaire.

Le procédé d'anonymisation comprend ensuite une étape 110 de réception d'au moins une image du flux vidéo, chaque image représentant une scène d'une emprise ferroviaire traversée par le véhicule ferroviaire. Parmi les images du flux vidéo capté par la caméra, le procédé peut par traiter l'intégralité des images ou une partie des images, par exemple à une fréquence déterminée (une image sur deux, une image sur dix par exemple) pour limiter la quantité de données à traiter.

Le procédé d'anonymisation comprend ensuite une étape 112 de détection, sur chaque image reçue, d'au moins un portique de poteau caténaire agencé dans l'emprise ferroviaire. Un portique désigne de façon générique une structure sensiblement rectangulaire que traverse le véhicule ferroviaire lors de son déplacement. Comme visible sur les figures 3 et 5 à 12 décrites plus en détail ci-après, le portique est formé d'un poteau caténaire d'un côté de la voie ferroviaire ou de deux poteaux caténaires chacun d'un côté de la voie, éventuellement reliés par une barre horizontale commune. Les poteaux caténaires permettent de porter les câbles caténaires et les câbles porteurs, et sont répartis le long de la voie ferroviaire.

Le procédé d' anonymisation comprend également une étape 114 de création pour chaque image reçue et à partir de chaque portique de poteau caténaire détecté sur l'image reçue, d'une boite englobante définissant une zone polygonale globalement entourée par le portique de poteau caténaire.

Les portiques sont détectés par un algorithme de reconnaissance de forme, par exemple un algorithme mettant en œuvre un modèle d'apprentissage automatique, dont l'architecture est spécifique ou déjà utilisée dans l'art antérieur pour d'autres applications et entraîné pour cette application spécifique, tel qu'un modèle de type Yolov8, Yolov5, *Detection Transformer* (DETR), etc.

Plus généralement, le modèle d'apprentissage automatique permet la détection de poteau caténaire et de détection de portique formé par un ou plusieurs poteaux caténaires, ledit modèle d'apprentissage recevant comme entrée chaque image reçue et fournissant comme sortie une information représentative de la présence et de la localisation d'un poteau caténaire et/ou d'un portique formé par un ou plusieurs poteaux caténaires, ledit modèle d'apprentissage étant pré-entraîné à partir d'un jeu de données comprenant des images représentant un ou plusieurs poteaux caténaires et un ou plusieurs portiques formés par un ou plusieurs poteaux caténaires.

Le modèle d'apprentissage est entraîné pour détecter les portiques et/ou déterminer les boites englobantes appliquées à l'image à partir des portiques.

La détection des portiques peut également être mise en œuvre par un algorithme de segmentation sémantique.

Les boites englobantes sont de façon préférentielle des quadrilatères, par exemple des rectangles, dont les quatre sommets représentent au mieux la forme générale des portiques de poteau caténaire.

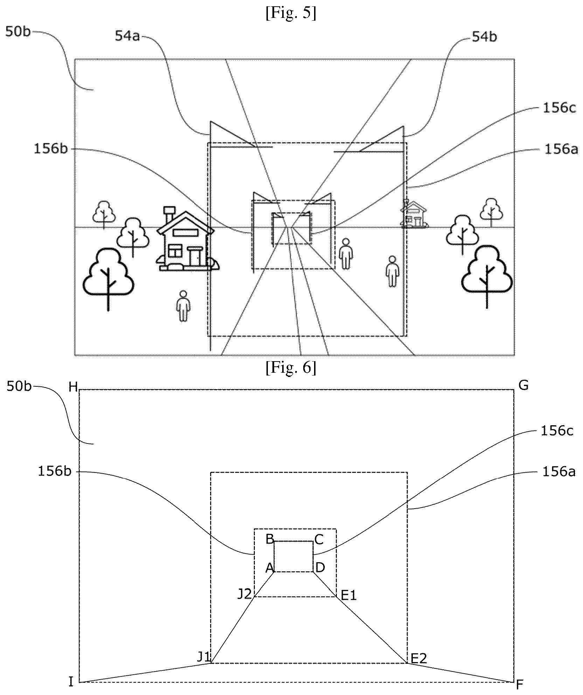

Les figures 5, 8, 10, 11 et 12 représentent schématiquement respectivement la première image 50b, une deuxième image 250, une troisième image 350, une quatrième image 450 et une cinquième image 550 telles que traitées par un procédé selon un mode de réalisation de l'invention, en particulier suite à ladite étape de détection de boite englobante.

La figure 5 représente des boites englobantes appliquées aux portiques formés par les poteaux caténaires indépendants de part et d'autre de la voie ferroviaire. Trois boites englobantes sont créées, une première boite 156a englobante relative à un premier portique, une deuxième boite 156b englobante relative à un deuxième portique et une troisième boite 156c englobante relative à un troisième portique.

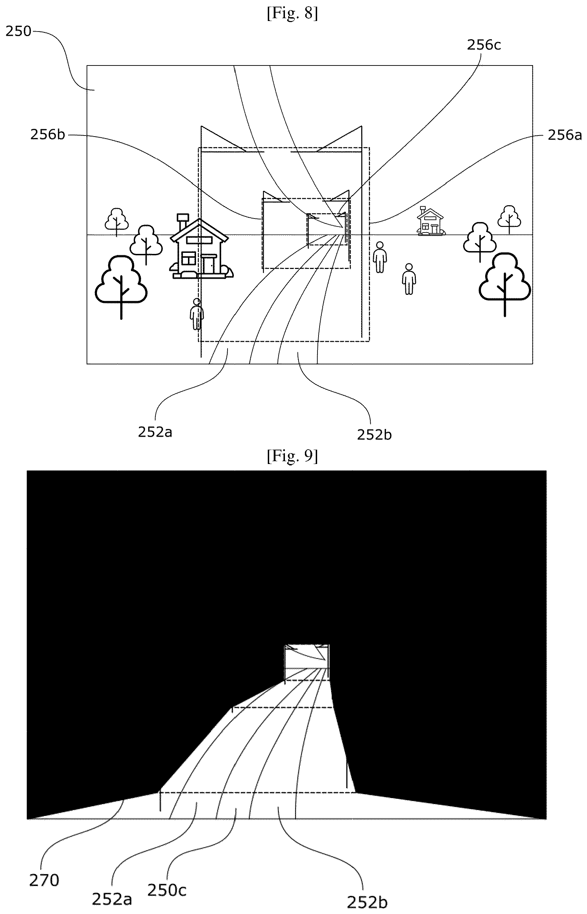

La figure 8 représente des boites englobantes appliquées aux portiques formés par les poteaux caténaires indépendants de part et d'autre de la voie ferroviaire de la deuxième image 250. Trois boites englobantes sont créées, une première boite 256a englobante relative à un premier portique, une deuxième boite 256b englobante relative à un deuxième portique et une troisième boite 256c englobante relative à un troisième portique. Cette deuxième image représente des voies ferroviaires doubles et dont les voies 252a, 252b ferroviaires sont courbes sur cette portion.

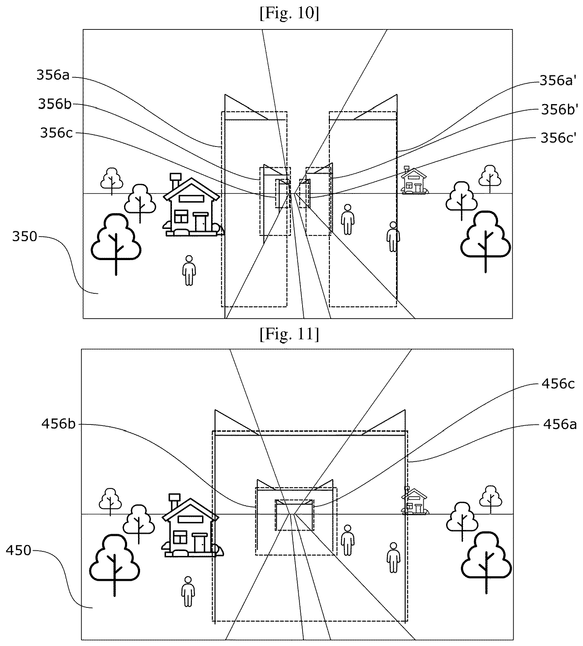

La figure 10 représente des boites englobantes appliquées aux portiques formés par les poteaux caténaires indépendants de part et d'autre de la voie ferroviaire de la troisième image 350. Selon ce mode de réalisation particulier, les boites englobantes sont formées de sous-boites, chaque sous-boite étant associée à un poteau caténaire du portique de poteau caténaire, et la boite englobante associée au portique de poteau caténaire est composée de deux sommets de chaque sous-boite englobante, en particulier les deux sommets gauches de la sous-boite la plus à gauche et les deux sommets droits de la sous-boite la plus à droite. La troisième image 350 ainsi traitée comprend ainsi une première boite formée de deux sous-boites.

La figure 11 représente des boites englobantes appliquées aux portiques formés par les poteaux caténaires de part et d'autre de la voie ferroviaire et reliés entre eux par une barre horizontale, de la quatrième image 450. Trois boites englobantes sont créées, une première boite 456a englobante relative à un premier portique, une deuxième boite 456b englobante relative à un deuxième portique et une troisième boite 456c englobante relative à un troisième portique.

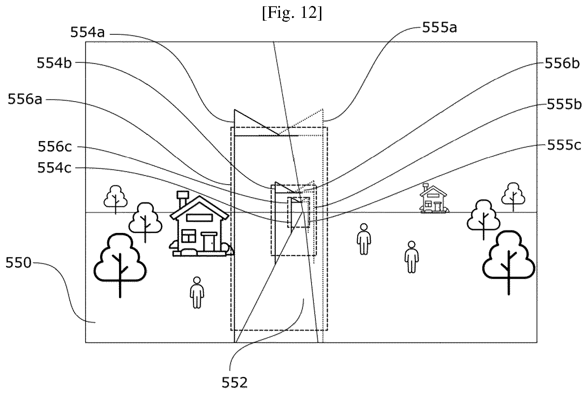

La figure 12 représente des boites englobantes appliquées aux portiques chacun formés par un poteau 554a, 554b, 554c caténaire unique d'une voie ferroviaire simple comprenant une seule voie 552 de circulation, de la cinquième image 450. Trois boites englobantes sont créées, une première boite 556a englobante relative à un premier portique, une deuxième boite 556b englobante relative à un deuxième portique et une troisième boite 556c englobante relative à un troisième portique. Pour former les portiques, le procédé prend en compte chaque poteau 554a, 554b, 554c caténaire chacun associé respectivement à un poteau 555a, 555b, 555c simulé, les poteaux 555a, 555b, 555c étant considérés comme agencés de l'autre côté de la voie 552 de circulation, de sorte à former un portique complet entourant la voie ferroviaire simple.

Le procédé d'anonymisation comprend ensuite une étape 116 de classement des boites englobantes en fonction de chacune de leurs dimensions sur l'image reçue. Le classement s'effectue par exemple par calcul de l'aire de chaque portique à partir des coordonnées des boites dans l'image. Le classement peut se faire selon l'ordre croissant ou décroissant selon le mode de réalisation mis en œuvre.

Le procédé d'anonymisation comprend ensuite une étape 118 de traçage d'un polygone de masquage pour chaque image reçue, reliant au moins un point de chaque boite englobante et définissant une zone d'anonymisation sur l'image. L'étape de traçage relie au moins un point de chaque boite englobante selon le classement des boites englobantes.

Préférentiellement, le polygone de masquage comprend au moins :
- les quatre sommets de la boite englobante classée comme de plus petite dimension, dite plus petite boite,
- les sommets inférieurs droits et les sommets inférieurs gauches de chaque boite englobante classée comme de dimensions supérieures à la plus petite boite,
- les quatre sommets de l'image reçue.

De préférence, et comme visible sur la figure 6 représentant schématiquement les boites 156a, 156b, 156c englobantes et un polygone ABCDE1E2FGHIJ1J2 de masquage obtenus par un procédé selon un mode de réalisation de l'invention à partir de la première image l'étape de traçage du polygone de masquage comprend la liaison des sommets suivants, successivement, dans cet ordre ou l'ordre inverse, et à partir de n'importe quel point de départ :
- le sommet A inférieur gauche de la plus petite boite 156c,
- le sommet B supérieur gauche de la plus petite boite 156c,
- le sommet C supérieur droit de la plus petite boite 156c,
- le sommet D inférieur droit de la plus petite boite 156c,
- les sommets E1 et E2 inférieurs droits de chaque boite 156a, 156b englobante classée comme de dimensions supérieures à la plus petite boite 156c, selon l'ordre croissant des dimensions des boites englobantes,
- le sommet F inférieur droit de la première image 50b,
- le sommet G supérieur droit la première image 50b,
- le sommet H supérieur gauche la première image 50b,
- le sommet I inférieur gauche la première image 50b,
- les sommets J1, J2 inférieurs gauches de chaque boite 156a, 156b englobante classée comme de dimensions supérieures à la plus petite boite 156c, selon l'ordre décroissant des boites englobantes.

Le procédé d'anonymisation comprend ensuite une étape 120 d'application du masquage sur l'image reçue à partir du polygone de masquage associé à ladite image. Le masquage est appliqué par exemple par remplissage des pixels par une couleur unique, par exemple par des pixels noirs ou des pixels blancs.

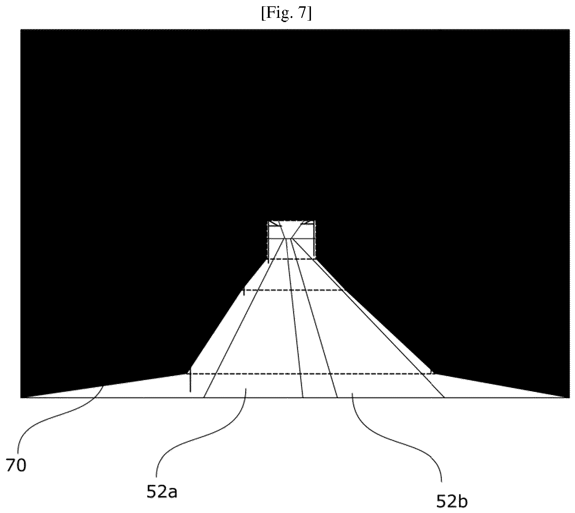

La figure 7 représente schématiquement la première image 50c telle qu'anonymisée par un procédé selon un mode de réalisation de l'invention. La zone anonymisée délimitée par le polygone 70 de masquage est ici complètement noire et aucune zone privative ni individu n'est visible, et la quasi-totalité voire la totalité de l'emprise ferroviaire est visible, en particulier les voies 52a, 52b ferroviaires.

La figure 9 représente schématiquement la deuxième image 250c telle qu'anonymisée par un procédé selon un mode de réalisation de l'invention. L'anonymisation fonctionne ainsi également avec une portion de voie courbe, le polygone 270 de masquage suivant avantageusement les courbures des voies 252a, 252b ferroviaires.

## Revendications

1. Procédé d'anonymisation d'images d'un flux vidéo capté depuis un véhicule ferroviaire, le procédé comprenant :
- une étape (110) de réception d'au moins une image du flux vidéo, chaque image représentant une scène d'une emprise ferroviaire traversée par le véhicule ferroviaire,
- une étape (112) de détection, sur chaque image reçue, d'au moins un portique de poteau caténaire agencé dans l'emprise ferroviaire,
- une étape (114) de création pour chaque image reçue et à partir de chaque portique de poteau caténaire détecté sur l'image reçue, d'une boite englobante définissant une zone polygonale globalement entourée par le portique de poteau caténaire,
- une étape (118) de traçage d'un polygone de masquage pour chaque image reçue, reliant au moins un point de chaque boite englobante et définissant une zone d'anonymisation sur l'image,
- une étape (120) d'application du masquage sur l'image reçue à partir du polygone de masquage associé à ladite image.

2. Procédé d'anonymisation selon la revendication 1, **caractérisé en ce qu'**il comprend une étape (116) de classement des boites englobantes en fonction de chacune de leurs dimensions sur l'image reçue, et **en ce que** l'étape (118) de traçage relie au moins un point de chaque boite englobante selon ledit classement.

3. Procédé d'anonymisation selon l'une des revendications 1 ou 2, **caractérisé en ce que** chaque boite englobante est un quadrilatère représentatif du portique de poteau caténaire.

4. Procédé d'anonymisation selon la revendication 3, **caractérisé en ce que** l'étape (112) de détection d'au moins un portique de poteau caténaire comprend :
- une première sous-étape de détection d'un premier poteau caténaire,
- une première étape de création d'une première sous-boite englobante définissant une zone polygonale globalement entourée par le premier poteau caténaire,
- une deuxième sous-étape de détection d'un deuxième poteau caténaire,
- une deuxième étape de création d'une deuxième sous-boite englobante définissant une zone polygonale globalement entourée par le deuxième poteau caténaire,
et **en ce que** le quadrilatère formant la boite englobante est formé par association de deux sommets de la première sous-boite englobante et de deux sommets de la deuxième sous-boite englobante, de sorte à définir une zone entourée par le portique de poteau caténaire formée par le premier poteau caténaire et le deuxième poteau caténaire.

5. Procédé d'anonymisation selon une combinaison de la revendication 2 et l'une des revendication 3 à 4, **caractérisé en ce que** le polygone de masquage comprend au moins :
- les quatre sommets de la boite englobante classée comme de plus petite dimension, dite plus petite boite,
- les sommets inférieurs droits et les sommets inférieurs gauches de chaque boite englobante classée comme de dimensions supérieures à la plus petite boite,
- les quatre sommets de l'image reçue.

6. Procédé d'anonymisation selon la revendication 5, **caractérisé en ce que** l'étape (118) de traçage du polygone de masquage comprend la liaison des sommets suivants, successivement, dans cet ordre ou l'ordre inverse, et à partir de n'importe quel point de départ :
a) le sommet inférieur gauche de la plus petite boite,
b) le sommet supérieur gauche de la plus petite boite,
c) le sommet supérieur droit de la plus petite boite,
d) le sommet inférieur droit de la plus petite boite,
e) les sommets inférieurs droits de chaque boite englobante classée comme de dimensions supérieures à la plus petite boite, selon l'ordre croissant des dimensions des boites englobantes,
f) le sommet inférieur droit de l'image reçue,
g) le sommet supérieur droit de l'image reçue,
h) le sommet supérieur gauche de l'image reçue,
i) le sommet inférieur gauche de l'image reçue,
j) les sommets inférieurs gauches de chaque boite englobante classée comme de dimensions supérieures à la plus petite boite, selon l'ordre décroissant des boites englobantes.

7. Procédé d'anonymisation selon l'une des revendications 1 à 6, **caractérisé en ce que** l'étape (112) de détection d'au moins un portique de poteau caténaire comprend une sous étape d'exécution d'un modèle d'apprentissage automatique de détection de poteau caténaire et de détection de portique formé par un ou plusieurs poteaux caténaires, ledit modèle d'apprentissage recevant comme entrée chaque image reçue et fournissant comme sortie une information représentative de la présence et de la localisation d'un poteau caténaire et/ou d'un portique formé par un ou plusieurs poteaux caténaires, ledit modèle d'apprentissage étant pré-entraîné à partir d'un jeu de données comprenant des images représentant un ou plusieurs poteaux caténaires et un ou plusieurs portiques formés par un ou plusieurs poteaux caténaires.

8. Produit programme d'ordinateur d'anonymisation d'images d'un flux vidéo capté depuis un véhicule ferroviaire, ledit produit programme d'ordinateur comprenant des instructions de code de programme pour l'exécution, lorsque ledit produit programme d'ordinateur est exécuté sur un ordinateur, des étapes d'un procédé (100) d'anonymisation selon l'une des revendications 1 à 7.

9. Système d'anonymisation d'images d'un flux vidéo capté depuis un véhicule (10) ferroviaire, comprenant une unité (20) de traitement des images du flux vidéo comprenant :
- un module de réception d'au moins une image du flux vidéo, chaque image représentant une scène d'une emprise ferroviaire traversée par le véhicule ferroviaire,
- un module de détection, sur chaque image reçue, d'au moins un portique de poteau caténaire agencé dans l'emprise ferroviaire,
- un module de création pour chaque image reçue et à partir de chaque portique de poteau caténaire détecté sur l'image reçue, d'une boite englobante définissant une zone polygonale globalement entourée par le portique de poteau caténaire,
- un module de traçage d'un polygone de masquage pour chaque image reçue, reliant au moins un point de chaque boite englobante et définissant une zone d'anonymisation sur l'image,
- un module d'application du masquage sur l'image reçue à partir du polygone de masquage associé à ladite image.

10. Système d'anonymisation selon la revendication 9, **caractérisé en ce qu'**il comprend une caméra (18) d'acquisition du flux vidéo, ladite caméra (18) étant agencée à l'avant d'un véhicule ferroviaire, de sorte à acquérir des images de l'emprise ferroviaire située à l'avant du véhicule (10) ferroviaire dans son sens de marche en fonctionnement normal.

11. Système d'anonymisation selon l'une des revendications 9 ou 10, **caractérisé en ce que** l'unité (20) de traitement est embarquée sur un véhicule (10) ferroviaire.
